# EUROPEAN PATENT APPLICATION

(11) **EP 3 761 500 A1**
(43) Date of publication of application: **06.01.2021**
(21) Application number: 19184422.4
(22) Date of filing: 04.07.2019
(51) Int. Cl.: H02M 7/23, H02M 1/12, H02M 1/00, H01F 17/00

(54) **GALVANICALLY ISOLATED SINGLE-PHASE OR MULTI-PHASE POWER CONVERTER**

(71) Applicant: Siemens Aktiengesellschaft, 80333 München (DE)
(72) Inventor: Robinson, Jonathan, 90489 Nürnberg (DE); Mondal, Gopal, 91058 Erlangen (DE); Neumeister, Matthias, 90469 Nürnberg (DE)

(57) **Abstract**

Galvanically Isolated Single-Phase or Multi-Phase Power Converter for conversion between alternating current and direct current, comprising
- DC terminals and AC terminals,
- a parallel circuit comprising a DC link capacitor and at least two half-bridges, which is arranged between the DC terminals, the half-bridges each comprising two power semiconductors,
- a control unit arranged to control the power semiconductors for interleaved power converter operation,
- an inductor comprising a winding for each of the half-bridges, a first terminal of each of the windings being connected to a respective half-bridge and the second terminals of the windings being interconnected,
- a further winding inductively coupled to the filter inductor and arranged between the AC terminals.

## Description

The present invention relates to a galvanically isolated single-phase or multi-phase power converter for conversion between alternating current (AC) and direct current (DC) in any direction or bidirectional, particularly a power converter arranged and operated as an interleaved converter.

Interleaved converters offer the possibility to reduce the volume and weight of inductive components. This reduction may be enhanced by using coupled inductors in interleaved converters.

Interleaving is known as using a parallel combination of two or more sets of power electronic elements that form a converter, connected to a common filter element. The power semiconductors are operated out of phase by 360° / n, where n is the number of parallel sets. The resulting current has a smaller peak-to-peak variation and a frequency n times as large as the individual converter currents, resulting in a smaller peak-to-peak variation than would result from a single converter, requiring less capacitance for the same output ripple voltage.

Some applications such as chargers, PV converters and power supplies require galvanic isolation. This can be achieved using an additional isolation transformer (this is most common in medium and high power applications) or an additional isolation converter stage such as a flyback converter.

The objective of the present invention is to provide an interleaved power converter with galvanic isolation with a reduced size and reduced complexity.

A galvanically isolated single-phase or multi-phase power converter for conversion between alternating current and direct current in accordance with the invention comprises DC terminals and AC terminals that allow connection of the converter to a DC network and an AC network. There will typically be two DC terminals. The number of AC terminals depends on the number of phases the converter uses and may be two for a single phase converter and at least three for a multi-phase converter.

The converter further comprises a parallel circuit comprising a DC link capacitor and at least two half-bridges, which is arranged between the DC terminals, the half-bridges each comprising two power semiconductors, and a control unit arranged to control the power semiconductors for interleaved power converter operation. As described above, interleaved operation comprises switching the power semiconductors of different half-bridges which are arranged in parallel with a phase shift that depends on the number of parallel half-bridges.

The converter additionally comprises an inductor comprising a winding for each of the half-bridges, a first terminal of each of the windings being connected to a respective half-bridge and the second terminals of the windings being interconnected. A further winding is inductively coupled to the inductor and arranged between the AC terminals.

In this arrangement, the further winding and the windings that make up the inductor form a transformer. Thus, the converter uses interleaved operation and provides galvanic isolation. Advantageously the integration of the transformer with the inductor avoids the second winding that would typically be necessary to form the isolating transformer as well as the associated part of a core. Since the windings and magnetic cores typically contribute strongly to the bulk and size of a converter a reduction of one winding reduces the size of the converter considerably. In addition, core and winding losses are reduced as well.

Further features that may be added alone or together in exemplary embodiments of the invention include:
- The parallel circuit, the inductor and the further winding may form a first phase circuit and the converter may comprise a second and third phase circuit, the second and third phase circuits comprising second and third parallel circuits, inductors and further windings, respectively. In this way the converter may act as a three-phase converter with respective AC terminals for three AC phases, each AC terminal being connected to a further winding of a respective phase circuit.
- The windings of the inductor may be arranged on respective legs of a first magnetic core, the number of legs corresponding to the number of interleaved half-bridges. A second core comprising one or more legs may be present, the second core being magnetically coupled to the first core via air gap or low permeability material and arranged to provide a path for common mode magnetic flux of the first conductors, the further winding being arranged on the second core. In this way the cores and windings form one inductor arrangement suitable for operation of the interleaved converter.
- The windings may be inversely coupled by being arranged in a similar manner, particularly wound in the same way, on parallel legs of the first magnetic core. When all of the windings are arranged in a similar manner on their respective legs of the first core each pair of windings is inversely coupled.
- The number of turns of the further winding may be lower than the number of turns of the windings. Advantageously this results in reduced losses as the current in the further winding is higher than in the windings. In one embodiment, the number of turns of the further winding is one third the number of turns of the windings, advantageously resulting in equal input and output voltage.
- The first core may be EE shaped (double-E shaped). In other words, the first core may comprise two parts separated by an air gap or low permeability material where both parts are shaped identically in the form of the capital letter E having a backside bar with equally spaced arms extending from the backside bar and wherein the parts are oriented to make the arms of the two E shapes point towards each other. The EE shape suggests exactly three arms and thus exactly three parallel and interleaved half-bridges but the shape may have fewer or more than three arms and thus have room for more than three phases. Each pair of arms forms one leg of the first core. The back bar of the E shapes may extend beyond one of the arms to allow the formation of a small air gap to the second core.
- The second core may be LL shaped which means in a manner similar to EE shaped that the second core has two parts separated by an air gap or low permeability material where each part is shaped like a capital letter L and where the arms of the two parts face each other two form the single leg. In this setup a common mode magnetic flux may or must return through the leg of the second core.
- Alternatively, the second core may comprise at least two legs or exactly two legs. In this case a common mode magnetic flux may return through the additional leg of the second core that may not have any conductors arranged on it. As an analogue to the EE shaped core the second core may be FF shaped with two parts separated by an air gap or low permeability material where the open ends of the backside bars of the two capital letter F shapes point towards the first core. This allows better control and stability of the inductance. While this increases the cost and weight of the core, the winding losses are still reduced when compared to a setup with a separate transformer.
- The first magnetic core may comprise a first core material and the second core may comprise a second core material different from the first core material. For example, the first magnetic core may be made from a low loss material, particularly ferrite or an amorphous core material while the second core may be made from a high flux density material such das Si-Fe or a powdered core material. Advantageously a high flux density material allows the second core be smaller reducing winding losses and enhancing overall efficiency.
- Particularly when using a high flux density material for the second core, these materials are typically stronger and can be made to support the overall inductor assembly. The second core may then be arranged to substantially surround the first magnetic core. In this way the second core will provide magnetic shielding reducing the stray inductance and thus reducing additional losses and problems in external components.
- The second core may be shaped as a multi-leg core in a first direction. Additionally a plurality of first cores is arranged to extend in a second direction to be magnetically coupled to the legs of the second core. In particular, the second direction may be perpendicular to the first direction and both may be perpendicular to the direction the legs extend in. In other words, in contrast to a second core that has a two dimensional form such as an LL shape or FF shape and an associated overall thickness the second core of this embodiment has a fully three-dimensional structure. In a first plane formed by the direction of the legs and the first direction the second core has the shape of a multi-leg core, such as an EE shape, again not limited to three arms. This shape is not necessarily present in all such planes but only in a part of it. In a second plane formed by the direction of the legs and the second direction the second core may have an LL shape or an FF shape. Again this shape is not present for all planes that cut through the second core. It may be present for all planes that cut through one of the legs of the second core. The first cores are preferentially oriented along the second direction so that their multi-leg form such as the EE shape extends in the second plane. The first cores are preferentially arranged parallel to each other.
- At the locations of the legs the second core may be LL-shaped with the arms of the L shape extending in the second direction. Then first cores are arranged adjacent to the arms of the LL shape. Thus an intersection of the inductor assembly with a second plane that comprises one of the legs of the second core may have the same shape as an inductor assembly with-out a three dimensional second core.
- The inductor assembly may comprise a third core shaped like the second core and arranged adjacent to the second core in the second direction on a side opposite from the first cores. This setup is analogous to the conversion of an LL shaped second core to an FF shaped second core in that it adds a second leg, in this case a second leg per first leg.
- The converter may comprise a first core for each of the phase circuits, the windings of that phase circuit being arranged on the legs of the first core. Additionally, the second core may comprise a leg for each of the phase circuits, the further windings of the phase circuits being arranged on the legs of the second core.
- Two or more specimens of the converter may be used to form a combined converter in which the DC sides of the converters are stacked, i.e. form a series connection. In the combined converter the AC sides, single- or multi-phase, are connected in parallel. The combined converter can be arranged to e.g. convert a low voltage AC input to a high-voltage DC output. In an alternative embodiment, the AC input is not connected in parallel but individual phases of a multi-phase AC input are connected to one converter each, while the stacked DC side is retained.

Embodiments of the present invention are now described with reference to the accompanying drawings to which the invention is not limited.
Fig. 1 illustrates an embodiment of a galvanically isolated single-phase converter;
Fig. 2 illustrates an embodiment of an inductor assembly used in the converter;
Fig. 3 illustrates an embodiment of a galvanically isolated three-phase converter;
Fig. 4 illustrates an embodiment of an inductor assembly for the three-phase converter;
Figs. 5 and 6 illustrate further embodiments of converters;
Figs. 7 to 10 illustrate further embodiments of inductor assemblies.

The illustrations of the drawings are in schematic form. It is noted that in different figures, similar or identical elements use the same reference signs.

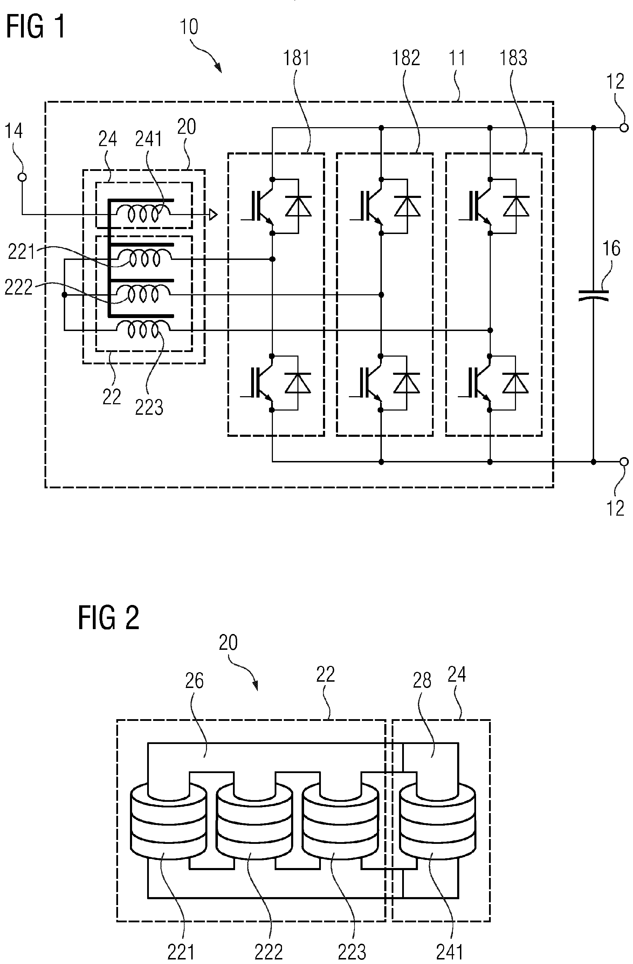

Fig. 1 illustrates converter 10 as a first embodiment of the invention. Converter 10 is suitable for conversion between AC and DC current in either direction. It comprises two DC terminals 12 and a single AC terminal 14, the other possible AC terminal being connected to ground in this example.

Between the DC terminals 12 a DC link capacitor 16 is arranged. Parallel to the DC link capacitor 16 and parallel to each other three half-bridges 181...183 are arranged. Each half-bridge 181...183 in turn comprises two power semiconductors in a series connection. The power semiconductors are controlled by a control unit that is not shown in Fig. 1. The control unit is arranged to operate the power semiconductors to achieve an interleaved operation mode. For this the power semiconductors are switched in such a way that a phase shift of 120° between the half-bridges is maintained.

The converter 10 further comprises an inductor arrangement 20. The inductor arrangement 20 in turn comprises a coupled inductor 22 with three windings 221...223. The three windings 221...223 are associated with the three half-bridges 181...183 and connected to the respective midpoints of the associated half-bridge 181...183. The remaining terminals of the windings 221...223 are interconnected.

The inductor arrangement 20 further comprises a transformer secondary side 24 with an isolated winding 241. The terminals of the isolated winding 241 form the AC terminals 12 of the converter. In the present example one if the terminals of isolated winding 241 is grounded so that one AC terminal remains, but in other embodiments both terminals of the isolated winding 241 could form AC terminals for the converter 10.

Fig. 2 shows the arrangement of the windings 181...183, the isolated winding 241 on a first and second magnetic core 26, 28. The first core 26 is an EE shaped three leg core. As is well known an EE shaped core comprises two parts separated by an air gap or low permeability material where both parts are shaped identically in the form of a capital letter E having a backside bar with equally spaced arms extending from the backside bar and wherein the parts are oriented to make the arms of the two E shapes point towards each other. The direction in which the backside bar of the E shape extends will herein be called the x-direction, while the direction that the legs of the first core extend in will be called the y-direction. Thus the E shape extends in the notional x-y-plane. In the spatial direction perpendicular to the x-y-plane of the E shape, which will be called the z-direction, the first core has a uniform thickness.

In converter 10, the three-legged first core 26 is associated with three parallel half-bridges 181...183 making up the interleaved setup. The windings 221...223 are each arranged on its own leg of the first core 26. The windings 221...223 are all wound in the same orientation and thus inversely coupled.

The second core 28 of the inductor assembly 20 is formed in an LL shape, which in analogy with the EE shape means it comprises two parts of capital letter L shape separated by an air gap or low permeability material. The second core 28 thus has a single leg which bears the isolated winding 241. In contrast to the EE shape the LL shape has open ended backside bars. The second core and the first core 26, 28 are arranged adjacent to each other in the x-direction so that the open ends of the backside bars point towards the first core 110 but leave an air gap. For this, the back bar of the E shape of the first core 26 extends at one end beyond the respective arm to allow formation of a narrow gap to the second core 28.

The first and second cores 26, 28 and the windings 221...223, 241 together form a coupled inductor, i.e. a single magnetic component, for interleaved operation of the converter 10 but at the same time they constitute a transformer that establishes galvanic isolation of the converter 10. This functional integration advantageously saves core material and space as well as winding space and reduces losses in both windings 221...223, 241 and cores 26, 28.

The topology of converter 10 introduces both highfrequency/low-magnitude and low-frequency/high-magnitude flux into the cores 26, 28. The high frequency flux flows in the coupled inductor section, i.e. in the first core 26. The low frequency flux flows between the isolated winding and the coupled inductor, i.e. in both the first and second cores 26, 28. To alleviate the effects converter 10 uses different core materials for the first and second cores 26, 28. In this embodiment, the first magnetic core is a ferrite core, while the second core is made from Si-Fe.

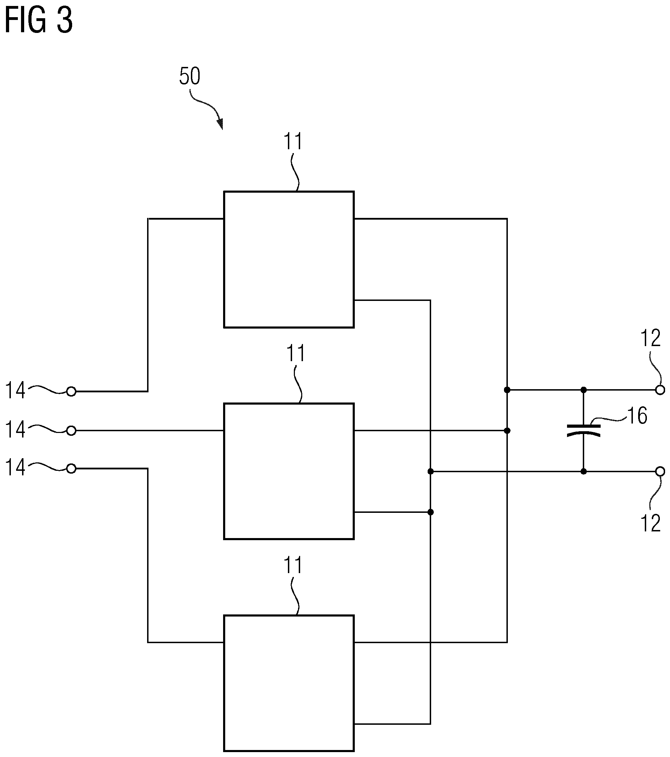

Fig. 3 shows a schematic representation of a corresponding three-phase converter 50. The converter 50 comprises DC terminals 12 and a DC link capacitor 16 between the DC terminals. Three converter blocks 11 are arranged parallel to each other and parallel to the DC link capacitor 16. The converter blocks 11 are shown in more detail in Fig. 1 and comprise the interleaved half-bridges 181...183 and the windings and the inductor arrangement with the windings 221...223 and the further winding 241. One terminal each of the further windings 241 forms the three AC terminals 14 of converter 50.

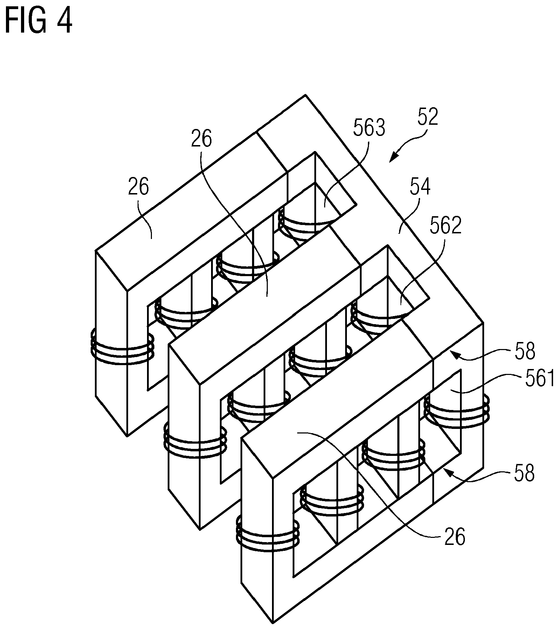

Fig. 4 shows a three-dimensional representation of an inductor arrangement 52 for use with the three-phase converter 50 of Fig. 3. The second cores 28 of the three inductor assemblies of the converter blocks 11 are replaced with a second core 54 that is a single structure and that acts as both a common mode inductor for the first cores 26 as well as a differential mode inductor for the conductors of the former second cores 28. In the embodiment of Fig. 4, the second core 54 is shaped as a multi-leg core in the z direction with three legs 561...563. Specifically, the second core 54 is shaped as an EE core in the z direction. In the x direction second core 54 retains the protrusions 58 that make up the LL shape of the second core 28 in Fig. 2. Second core 54 has three pairs of such protrusions 58 located at the three areas in the z direction where its legs 561...563 are. In another embodiment the protrusions 58 could be removed from the second core 54 and instead added to the associated first cores 26.

Thus, the second core 54 has a fully three-dimensional structure in that in the y-z-plane the second core 54 has the shape of a multi-leg core, such as an EE shape, not limited to three arms. In the x-y-plane at the z coordinate where legs 561...563 are located, the second core 54 has an LL shape. In the second core 54, the further windings 241 for each of the phases are located at the leg 561...563 associated with that phase. Similar to other three phase transformers, it is possible to connect the three further windings together in delta, wye or zig-zag. Beside the second core 54, the inductor arrangement 52 comprises a first core 26 for each of the phases of the interleaved converter 50, in this particular embodiment three first cores 26. The first cores 26 are oriented along the x direction and arranged parallel to each other.

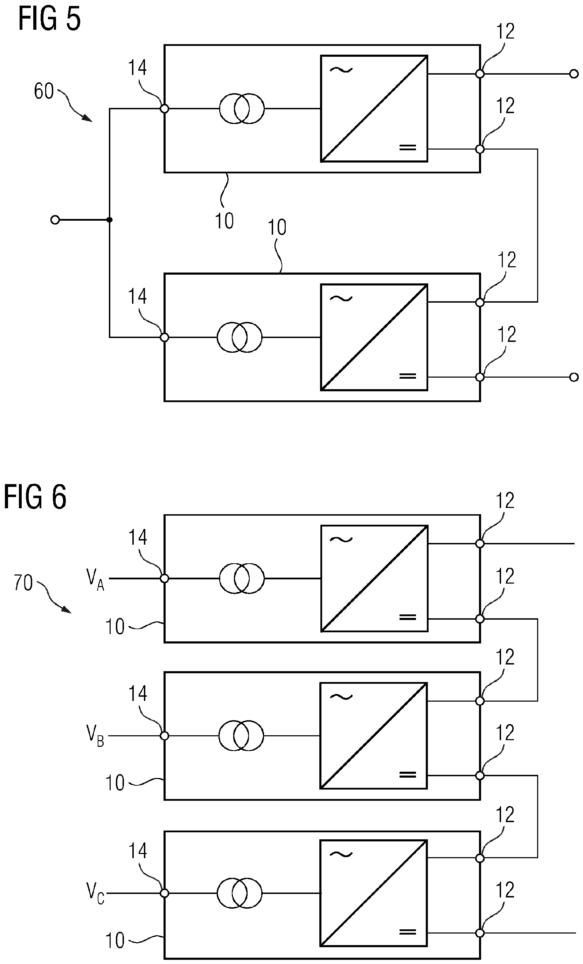

Fig. 5 shows a combined converter 60 wherein two converters 10 are stacked on the DC side to achieve a higher-voltage DC output with low voltage AC inputs. In combined converter 60 the AC terminals 14 of both converters 10 are connected to the input AC voltage in parallel, while the DC terminals 12 are connected in series, wherein the upper DC terminal 12 of one converter 10 and the lower DC terminal 12 of the second converter 10 are connected and the remaining two DC terminals 12 form the DC terminals of the combined converter 60. Fig. 5 shows the combined converter 60 as a single phase circuit, but it may also be arranged for a three phase AC voltage in which case the converters 10 must be replaced with three phase converters 50 if Fig. 3. While Fig. 5 shows two converters 10, the combined converter 60 may also be built using three or more converters 10, 50.

The configuration of Fig. 5 offers two additional benefits in that harmonics may be canceled advantageously by (a) phase shifting the harmonics of each converter 10, 50 and (b) phase shifting the AC input by changing the winding configuration. A common example with bipole HVDC is using Y-D or Y-Y transformer. It is also possible to individually isolate the different converters 10, 50 on the DC side, for example for applications that stack PV panels or even series connected wind turbines.

Fig. 6 shows a combined converter 70 wherein three converters 10 are stacked on the DC side to achieve a higher-voltage DC output from a three-phase low voltage AC input. In combined converter 70 the AC terminals 14 of the three converters 10 are connected to one phase of the three-phase input AC voltage, while the DC terminals 12 are connected in series. Similar harmonic benefits as with combined converter 60 can be achieved with this configuration.

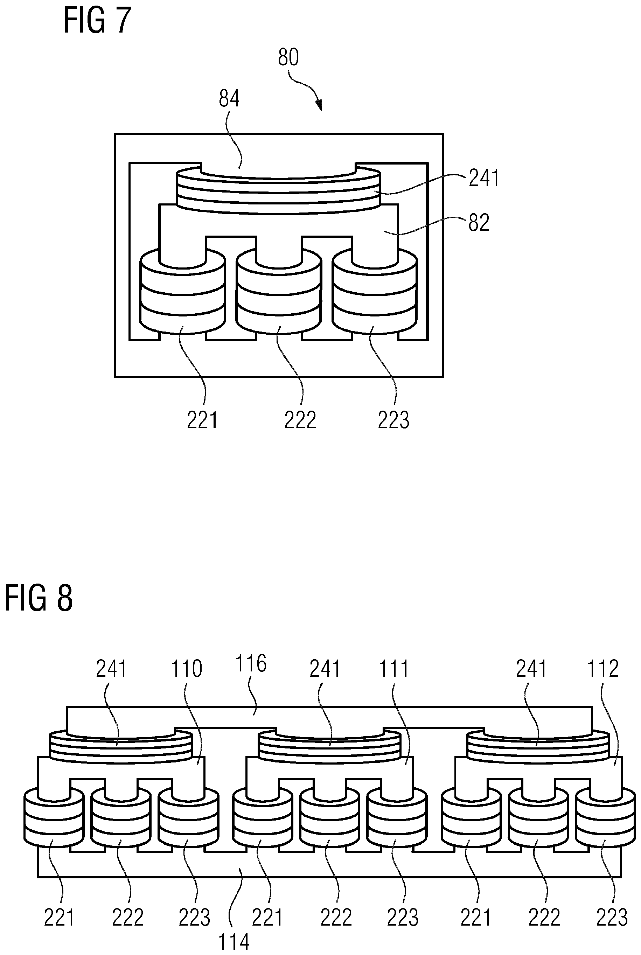

Fig. 7 shows a further example for an inductor assembly 80 that may be used with converter 10. This inductor assembly 80 comprises a first core 82 which is EE shaped in principle. It comprises three legs that carry the windings 221...223. One of the back bars of the EE shape is extended and wound to form a shell around the rest of the first core 82. The second core 84 is built with a bigger diameter than the legs of the first core and is arranged close to the other back bar of the EE shape of the first core 82. On the side facing away from the legs of the first core 82, the second core 84 connects to the shell formed by the first core 82. The shell design shown in Fig. 7 is suitable for a single-phase converter. As with the other designs of inductor assemblies this design can be extended to three phases without additional external limbs.

Fig. 8 shows a three-phase version of the inductor assembly 80 of Fig. 7 for use with the three-phase converter 50. It comprises three EE shaped cores 110...112 arranged side-by-side. The back bars of one of the E shape parts are connected to form a single bar 114. The remaining back bars form a wider E shape core 116 connecting cores 110...112. The windings are arranged similarly to Fig. 7.

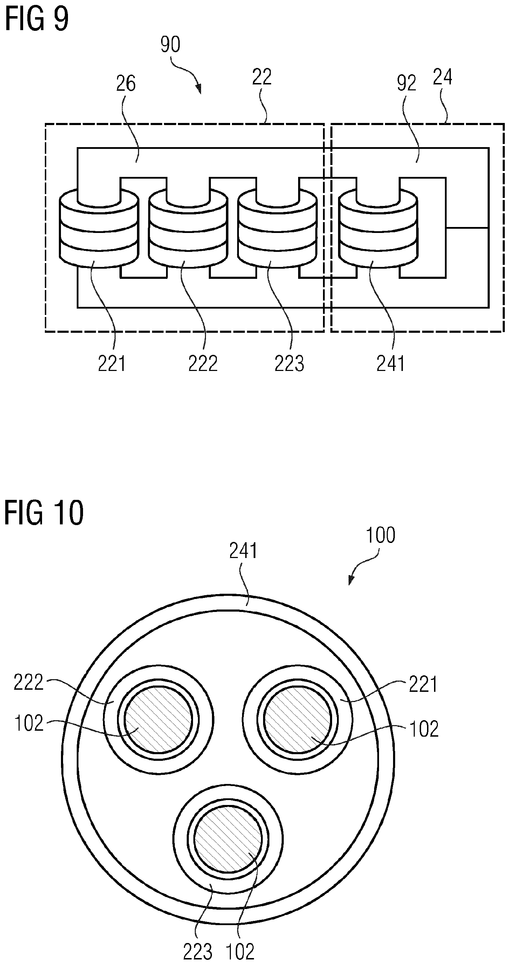

Fig. 9 shows a variation of inductor assembly 20 in the form of an inductor assembly 90 which comprises an FF shaped second core 92 instead of the LL shaped second core 28 shown in Fig. 2. The second core 92 thus comprises a second leg beyond the leg carrying the further winding 241. The second leg is left without any windings. This allows better control and stability of the inductance.

Fig. 10 shows a cross section of another variation in the form of inductor arrangement 100. In this arrangement the first core 102 comprises three legs that are arranged as a triangle. The legs carry the windings 221...223. The further winding 241 is wound in such a way that it surrounds the windings 221...223.

### List of reference numbers

- 10, 50, 60: converter
- 11: converter block
- 12: DC terminals
- 14: AC terminals
- 16: DC link capacitor
- 181...183: half-bridges
- 20, 80, 90, 100: inductor assembly
- 22: interleaved inductor
- 221...223: windings
- 24: transformer secondary side
- 241: further winding
- 26, 82, 102: first core
- 28, 54, 84, 92: second core
- 52: inductor assembly
- 561...563: legs
- 58: protrusions
- 110...112: cores
- 114, 116: back bars

## Claims

1. Galvanically isolated single-phase or multi-phase power converter (10, 50, 60, 70) for conversion between alternating current and direct current, comprising
- DC terminals (12) and AC terminals (14),
- a parallel circuit comprising a DC link capacitor (16) and at least two half-bridges (181...183), which is arranged between the DC terminals (12), the half-bridges (181...183) each comprising two power semiconductors,
- a control unit arranged to control the power semiconductors for interleaved power converter operation,
- an inductor (22) comprising a winding (221...223) for each of the half-bridges (181...183), a first terminal of each of the windings (221...223) being connected to a respective half-bridge (181...183) and the second terminals of the windings (221...223) being interconnected,
- a further winding (241) inductively coupled to the inductor (22) and arranged between the AC terminals (14).

2. The converter (10, 50, 60, 70) of claim 1, wherein
- the parallel circuit, the inductor (22) and the further winding (241) form a first phase circuit,
- the converter (10, 50, 60, 70) comprises a second and third phase circuit, the second and third phase circuits comprising second and third parallel circuits, inductors and further windings, respectively.

3. The converter (10, 50, 60, 70) of claim 1 or 2, wherein the windings (221...223) of the inductor (22) are arranged on respective legs of a first magnetic core (26, 82, 102), the number of legs corresponding to the number of interleaved half-bridges (181...183), further comprising a second core (28, 54, 84, 92) comprising one or more legs, the second core (28, 54, 84, 92) being magnetically coupled to the first core (26, 82, 102) via air-gaps or low-permeability material and arranged to provide a path for common mode magnetic flux of the first conductors, the further winding (241) being arranged on the second core (28, 54, 84, 92).

4. The converter (10, 50, 60, 70) of one of the preceding claims, wherein pairs of the windings (221...223) are inversely coupled.

5. The converter (10, 50, 60, 70) of one of the preceding claims, wherein the second core (28, 54, 84, 92) is LL shaped.

6. The converter (10, 50, 60, 70) of one of claims 1 to 4, wherein the second core (28, 54, 84, 92) comprises at least two legs.

7. The converter (10, 50, 60, 70) of claim 6, wherein the second core (28, 54, 84, 92) is FF shaped.

8. The converter (10, 50, 60, 70) of one of the preceding claims, wherein the first core (26, 82, 102) comprises a first core material and wherein the second core (28, 54, 84, 92) comprises a second core material different from the first core material.

9. The converter (10, 50, 60, 70) of one of the preceding claims, wherein the second core (28, 54, 84, 92) is shaped as a multi-leg core in a first direction and wherein a plurality of first cores (26, 82, 102) is arranged to extend in a second direction to be magnetically coupled to the legs of the second core (28, 54, 84, 92).

10. The converter (10, 50, 60, 70) of claim 9, wherein at the locations of the legs the second core (28, 54, 84, 92) is LL-shaped with the arms of the LL shape extending in the second direction and the first cores (26, 82, 102) are arranged adjacent to the arms of the LL shape.

11. Multi-phase power converter (10, 50, 60, 70) according to claims 2 and 3, wherein
- the converter (10, 50, 60, 70) comprises a first core (26, 82, 102) for each of the phase circuits, the windings (221...223) of that phase circuit being arranged on the legs of the first core (26, 82, 102),
- the second core (28, 54, 84, 92) comprises a leg for each of the phase circuits, the further windings (241) of the phase circuits being arranged on the legs of the second core (28, 54, 84, 92).

12. Combined power converter (60) comprising at least two converters (10, 50) according to one of the preceding claims, wherein the AC terminals (14) of the converters (10, 50) are connected in parallel and the DC terminals (12) of the converters (10, 50) form a series connection.

13. Combined power converter (70) comprising at least two converters (10, 50) according to one of claims 1 to 12, wherein the DC terminals (12) of the converters (10, 50) form a series connection and each AC terminal (14) of one of the converters (10, 50) is arranged to connect to a single phase of a multi-phase AC network.
